Europäisches Patentamt

European Patent Office

Office européen des brevets

(11) Publication number: **0 085 479**

**A1**

(12) # EUROPEAN PATENT APPLICATION

(21) Application number: **83300087.0**

(22) Date of filing: **07.01.83**

(51) Int. Cl.³: **B 60 R 1/00**

(30) Priority: **07.01.82 GB 8200427**

(43) Date of publication of application:
**10.08.83 Bulletin 83/32**

(84) Designated Contracting States:
**BE DE FR GB IT NL SE**

(71) Applicant: **Dupee, Leslie F.**
**7 South Road**
**Histon Cambridgeshire CB4 4PB(GB)**

(72) Inventor: **Dupee, Leslie F.**
**7 South Road**
**Histon Cambridgeshire CB4 4PB(GB)**

(74) Representative: **Beresford, Keith Denis Lewis et al,**
**R.G.C. Jenkins & Co. 12-15, Fetter Lane**
**London EC4A 1PL(GB)**

(54) **Rear viewing system.**

(57) A rear viewing system for a driver of a vehicle (10) towing a caravan (12) comprises a first optical device (18; 42; 46) carried by said caravan (12) and a second optical device (14; 40; 44) carried by said vehicle (10), so as to define a viewing path for the driver rearwardly, by way of an internal rear view mirror (22) within said vehicle (10), through the rear window (16) of said vehicle (10) and through said caravan (12), said first optical device (18; 42; 46) being arranged to bend light downwardly towards said vehicle (10), and said second optical device (14; 40; 44) being arranged for directing light from said caravan (12) towards said internal rear view mirror (22).

FIG. 1

EP 0 085 479 A1

## REAR VIEWING SYSTEM

The invention concerns a rear viewing system for a driver of a vehicle towing a caravan, and means for use in such a system.

Various devices are known for increasing the field of vision of a driver in a car which is towing a caravan. These may be used alone or in combination.

One such device is a periscope adapted to be mounted on a car roof so that, by looking forwardly through the upper edge of the windscreen of the car, the driver can view rearwardly over the roof of the car and through the caravan. A disadvantage of using a periscope is that the driver has an additional viewing device to monitor beyond the usual internal rear view mirror and car wing mirrors.

Extended wing mirrors mounted on the sides of a car by way of cantilever arms are also known for providing a rearward view past the side walls of a caravan. However, the field of view is restricted.

U.K. Patent No. 1370376 discloses an arrangement which increases the area of view immediately behind a caravan on tow. This arrangement features a prismatic lens mounted in the rear window of the caravan so that the driver can view rearwardly, by
way of the internal rear view mirror in the car,
through the caravan. The lens is constructed to
cause the rearwardly extending light path from the
driver to bend downwardly, thus bringing
into the field of view an area situated close behind
the caravan and below the level of its rear window.
There are two problems inherent in this arrangement.
Firstly, it is subject to chromatic aberration and
objects in the distant field are not clearly visible
to the driver through the lens. Secondly, it is only
suitable for use in a combination of a car and a
caravan in which the car rear window is substantially
on a level with the caravan windows.

The present invention provides a pair of optical
devices that can be carried by a vehicle and a
caravan being towed by the vehicle respectively to give
a driver of the vehicle an increased field of view
without requiring the driver to divert his gaze during
driving towards an additional viewing device beyond
those normally provided.

According to one aspect of the invention, a rear
viewing system for a driver of a vehicle towing a
caravan comprises a first optical device carried by the
caravan and a second optical device carried by the
vehicle so as to provide a viewing path for the driver, by way of the internal rear view mirror in the vehicle, through the vehicle rear window and through the caravan.

By employing these devices, the light path may be bent to obtain a view through the caravan when the caravan windows are higher than the rear window of the vehicle.

The optical devices may take various forms. Preferably, they are of sheet or laminar construction. For example, one or both of the devices may be a fresnel lens. Another possibility is for one or both of the devices to be a fresnel prism.

When two sheet refractors of this type are used, it is possible to correct for chromatic aberration and thereby provide a viewing system for a combination of a car and a caravan which makes the distant field clearly visible to a driver of the car whilst still attaining an improved field of view, relative to extended wing mirrors, in the region close behind the caravan.

Conveniently, the optical devices are mounted inside the vehicle and the caravan adjacent to the vehicle rear window and the caravan front window respectively.

The orientation of vehicle rear windows and their height above the ground varies from model to model, and the same is true of caravan front windows although to a much lesser extent. Very surprisingly, inspite of this, it has been discovered that certain first and second optical devices can be employed satisfactorily to cover a range of car models and caravan models.

In accordance with this aspect to the invention, a first optical device for a caravan is designed to bend a light ray within a first range of angles including angles between 0° amd 20° to a normal to a general plane of the first device, through an angle from 7° to 12°.

For this purpose, the first refractor may include a first set of prisms having equal prism angles in the range from 12° to 27°.

Further, according to this aspect to the invention, a second optical device for a vehicle is designed to bend first and second light rays within a second range of angles including angles between 23° and 58° to a normal to a general plane of the second device, such that the first light ray is bent through an angle from 3° to 8° and such that the second light ray is bent through an angle from 13° to 18°.

In this case, the second refractor may include a second set of prisms, having equal prism angles in the range from 6° to 11°.

To increase the variety of car models and caravan models with which these devices may be employed, they may in use be mounted in the vehicle and caravan in an adjustable manner permitting their orientations to be varied.

The invention is not confined to application to a car and caravan combination, and according to another aspect to the invention there is provided viewing means for forming an optical path which is bent at two locations, the viewing means comprising two optical devices, said devices being designed to co-operate such that, when arranged in pre-determined positions relative to one another, one device bends a beam of light away from a first path through an angle from 7° to 12° towards the other device and the other device bends the beam of light into a second path which is oriented between an angle of 4° away from the first path and an angle of 6° towards the first path.

The invention is described further, by way of example, with reference to the accompanying drawings, in which:

Figure 1 is a diagrammatic side view of a first car and a first caravan having a rear viewing system embodying the present invention, showing the viewing path in vertical section and including details of the viewing means in relation to the car rear window and the caravan front window;

Figure 2 is a diagrammatic plan view of the same car and the same caravan, showing the field of view in horizontal section;

Figure 3 is a detailed side view of the viewing means shown in Figure 1, illustrating the way in which the viewing means are mounted on the car rear window and the caravan front window;

Figure 4 is a perspective view showing the general form of each refractor of the viewing means;

Figure 5 is a diagrammatic side view of a second car and a second caravan incorporating the viewing means shown in Figures 1, 3 and 4, including details of the viewing means in relation to the car rear window and the caravan front window;

Figure 6 is a graph of prism angle against viewing means angle for the general form of viewing means associated with the car in Figures 1 and 5 in relation to a particular construction of the viewing means associated with the caravan in Figures 1 and 5;

Figures 7a and 7b are diagrams representing the path of a light ray through the viewing means associated with the caravan for limiting orientations of such viewing means;

Figures 8a and 8b are diagrams representing the path of a light ray through the viewing means associated with the car for limiting orientations of such viewing means;

Figure 9 is a diagrammatic side view through yet another car and caravan illustrating a further embodiment of the viewing means and including details of the further viewing means in relation to the car rear window and the caravan front window; and

Figure 10 is a diagrammatic side view through the car and the caravan illustrated in Figure 1, showing another embodiment of the viewing means and including details of these viewing means in relation to the car rear window and the caravan front window.

- 8 -                    0085479

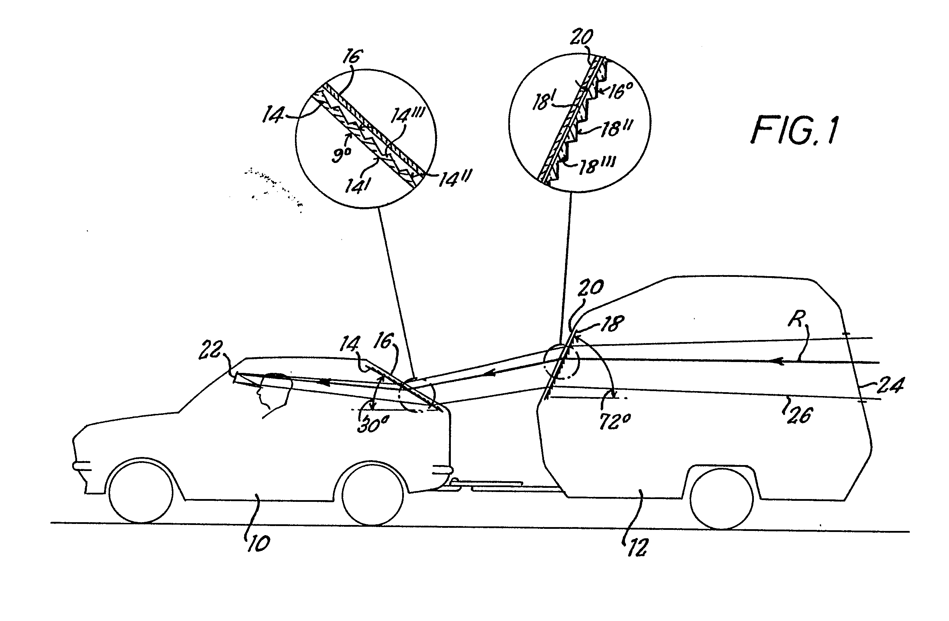

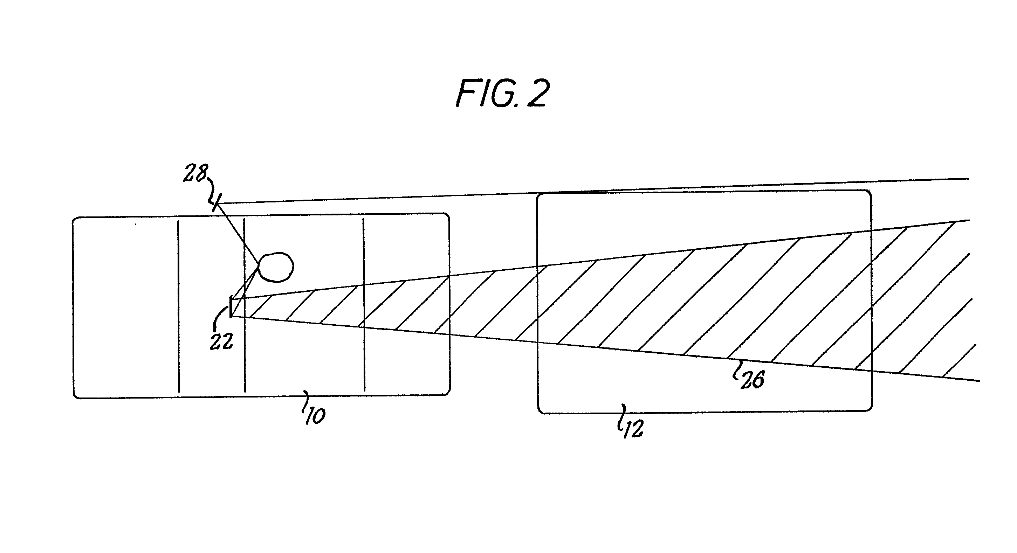

Referring initially to Figures 1 and 2, these illustrate a rear viewing system for a first model of car 10 and a first model of caravan 12.

The car 10 has a first sheet refractor 14 mounted inside it adjacent the rear window 16. The refractor 14 is generally rectangular and overlies substantially the entire surface of the rear window 16, although this is not essential.

A second sheet refractor 18 is mounted inside the caravan 12 adjacent the caravan front window 20. The refractor 18 is also rectangular and overlies substantially the entire window 20, which again is not essential.

As a result of the refractors 14 and 18, a driver in the car 10 can view rearwardly by looking towards the internal rear view mirror 22 inside the car 10 and through the car rear window 16 and the front window 20 and the rear window 24 of the caravan 12.

The vertical and horizontal fields of vision are illustrated in Figures 1 and 2, from which it can be seen that, in the vertical plane, a forwardly directed light beam 26 extending from the distant field through the caravan

rear window 24 is bent downwardly by the refractor 18 towards the car rear window 16, and is bent upwardly by the refractor 14 towards the rear view mirror 22. In the horizontal plane, the light beam 26 converges uniformly towards the mirror 22. The field of vision obtained by combined viewing through the internal rear view mirror 22 and an external wing mirror 28 is sufficient to enable vehicles following the car 10 to be seen by the driver, whether they are in the distance, or following the caravan 12 closely, or even pulling out to overtake the car 10 and caravan 12.

The rear window 24 of the caravan 12 subtends an angle between 5° and 6° at the rear view mirror 22 in the car 10 and limits the field of view accordingly consequently, the light beam 26 has an included vertical angle between 5° and 6°. In order to optimise the field of view through the caravan 12, it is preferable for the portion of the light beam 26 within the caravan 12 to be oriented such that it lies between a line extending upwardly at an angle of 2° in relation to the horizontal and a line extending downwardly at an angle of 4° in relation to the horizontal. In the description which follows, the light ray R which extends forwardly through the caravan 12 at the horizontal will be taken as a reference.

In this instance, the front window 20 of the caravan 12 is disposed at an angle of approximately 72° in relation to the horizontal. The refractor 18 is arranged parallel to the window 20 and bends the forwardly directed, horizontal, light ray R downwardly towards the car rear window 16 through an angle of approximately 8°. The car rear window 16 lies at an angle of approximately 30° relative to the horizontal and the refractor 14 is substantially parallel to the window 16. The light ray R impinges on a lower region of the refractor 14, which bends it upwardly towards the rear view mirror 22. As it approaches the rear view mirror 22, the light ray is at an angle of approximately 2° above the horizontal.

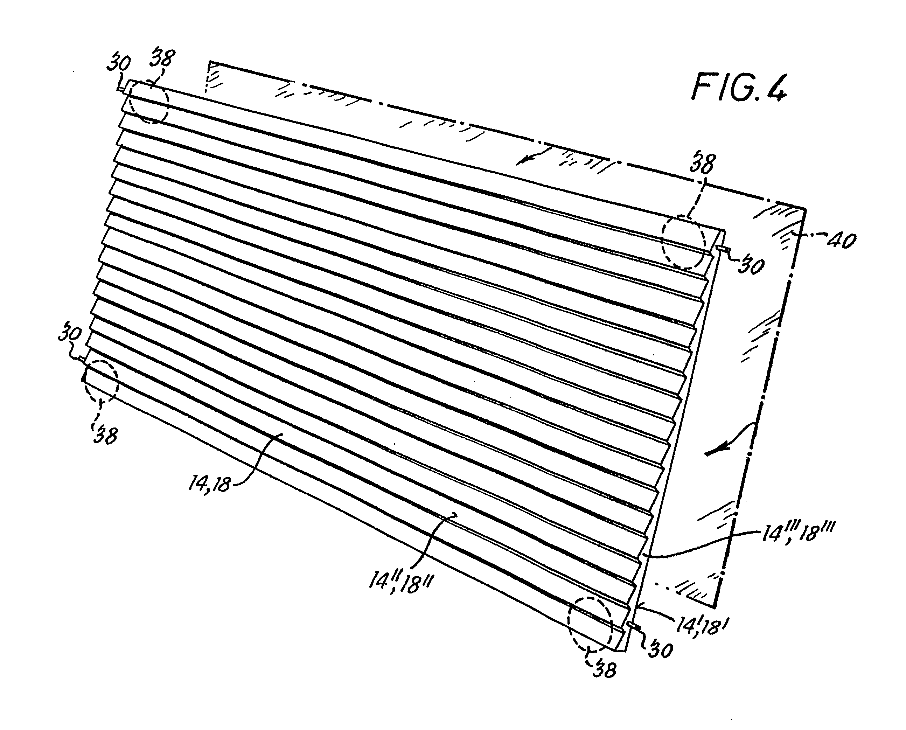

This configuration of light path is achieved, in this embodiment, using refractors 14 and 18 which are fresnel prisms each having the general form shown in Figure 4. That is, one face 14', 18' of each refractor is substantially plane and the other face 14", 18" is corrugated to define a set of prisms 14''', 18''' arranged one below the other in the generally vertical direction of the refractor and each extending from side to side of the refractor. Each prism 14''', 18''' has a prism angle defined between the plane face 14', 18' and the corrugated face 14", 18" and the prism angles are constant throughout the respective refractor 14, 18. Consequently, the refractors 14, 18 are designed to bend light by an amount related to prism geometry, rather than to focus a light beam.

Both refractors 14, 18 are formed from a material having a refractive index of 1.495, but their particular constructions differ in that the prism angle for the refractor 14 is approximately 9°, whereas that for the refractor 18 is approximately 16°.

It should also be noted that the mounting configurations for the refractors 14, 18 are different. In the case of the refractor 14, the corrugated face 14" faces the car rear window 16, and the apices of the prisms 14''' point downwardly. In the case of the refractor 18, the substantially plane face 18' faces the caravan front window 20, and the apices of the prisms 18''' point upwardly. The refractors mutually compensate satisfactorily for chromatic aberration when viewing distant objects.

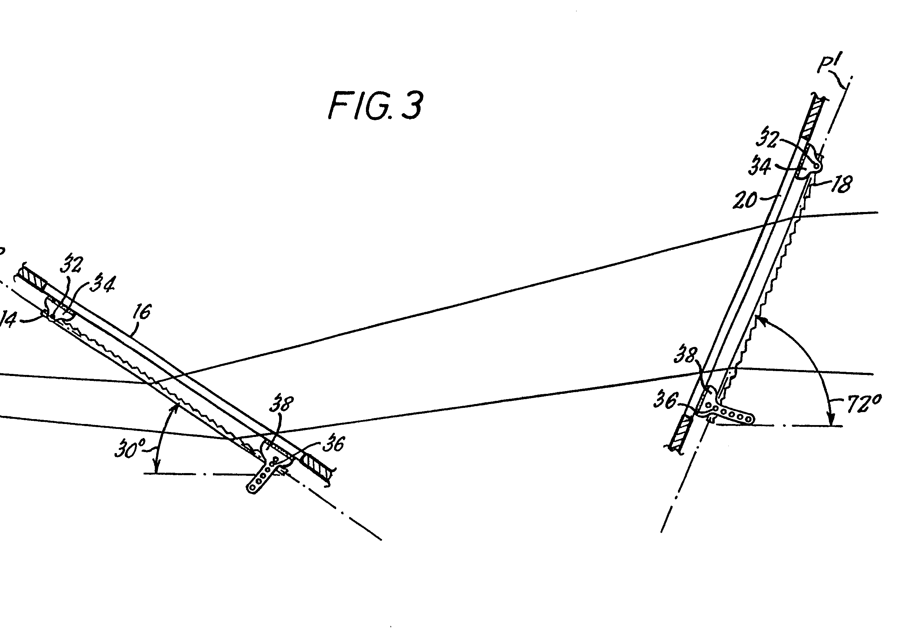

Each of the refractors 14, 18 is preferably mounted on the associated window in the manner illustrated in Figure 3, For this purpose, each refractor is formed at its corners with pins 30 (see Figure 4) which are received in openings 32 in an upper pair of mounts 34 and in openings 36 in a lower pair of mounts 38, the mounts 34 and 38 being adhered to the respective window. The refractors are sufficiently stiff to be self supporting when carried by the mounts 34, 38 but sufficiently flexible that they can be bent for engaging the pins 30 in the associated openings.

The upper mounts 34 each have only a single opening 32, whereas the mounts 38 each have a plurality of openings 36 disposed in an arc. Accordingly, the refractors 14, 18 may be oriented with their main planes (designated P and P' respectively in Figure 3) generally parallel to the associated window, as in the present instance, or at a selected acute angle relative to that window, as desired, by an appropriate choice of openings 36 for receiving the lower pins 30.

Alternative possibilities for the mountings are also indicated in Figure 4 by dashed lines, and dot and dash lines, respectively. The dashed lines represent adhesive pads 38 which may be provided at the corners of the refractors for securing them to the windows. The dot and dash lines represent an adhesive film 40 which may be provided on the plane face of the refractor 18 for attaching that refractor to the associated window. Such a film cannot, of course, be used for the refractor 14.

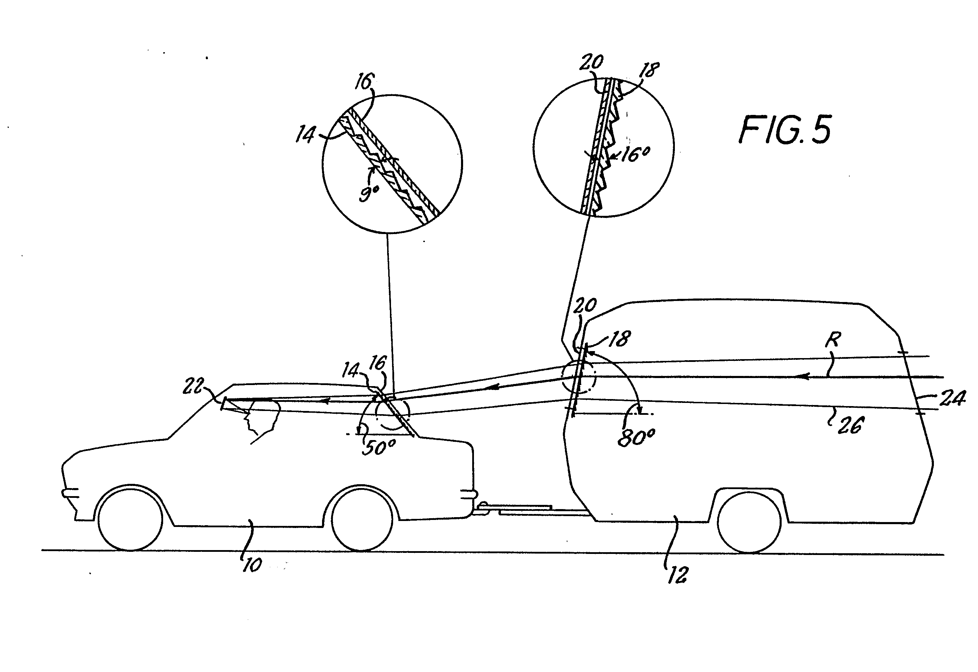

Figure 5 shows a second model of car 10 and a second model of caravan 12. Similar items are designated by the same reference numerals as in Figures 1 and 2.

In this combination, the front window 20 of the caravan is disposed at an angle of 80° in relation to the horizontal, and the rear window 16 of the car 10 is disposed at an angle of 50° in relation to the horizontal.

Nevertheless, the same refractors 14 and 18 are employed. The refractors are again parallel to the windows 16, 20.

As before, the refractor 18 bends a forwardly directed horizontal light ray downwardly through an angle of about 8° towards the car rear window 16. However, in this instance, the light ray R strikes the refractor 14 in an upper region thereof and is bent towards the internal rear view mirror 22 of the car 10 such that it approaches the mirror at an angle which is approximately 3° below the horizontal.

Inspite of the fact that the orientations of the car rear window 16 and the caravan front window 20 are quite different from those in the combination of Figures 1 and 2, identical refractors 14 and 18 facing the same way in relation to and parallel with the associated windows will serve. This is possible because in the two cars the reference light ray passes through different regions of the car rear windows 16 and approaches the driving mirror at a different angle accordingly.

Research indicates that caravan front windows are predominantly oriented at angles from 72° to 80° in relation to the horizontal, although in some cases their angles in relation to the horizontal may be as much as 86°. Similarly, car rear windows in 80% of car models lie within the range from 30° to 50° relative to the horizontal, although angles as small as 16° and as large as 72° are found in certain models. It has been found that the pair of refractors 14 and 18 operate satisfactorily for most combinations of car and caravan, and particularly for combinations in which the caravan front window lies anywhere within the full specified range from 72° to 86° and the car rear window lies anywhere within the middle range from 30° to 50°.

Although the preferred prism angles for the refractors 14 and 18, when they are both formed from a material having a refractive index of 1.495, are approximately 9° and approximately 16° respectively as mentioned above, these angles may be varied to some extent and yet still result in a pair of refractors which are applicable to the majority of car and caravan combinations. Particularly, the prism angle for the refractor 14 may be varied between 7° and 10°, and the prism angle for the refractor 18 may be varied between 14° and 24°. Of course, the range of prism angles for each refractor can be varied by employing materials of different refractive index. Preferably, however, the prism angle for the refractor 14 lies within the limits of 6° and 11° irrespective of refractive index, and the prism angle for the refractor 18 lies within the limits of 12° and 27° irrespective of refractive index.

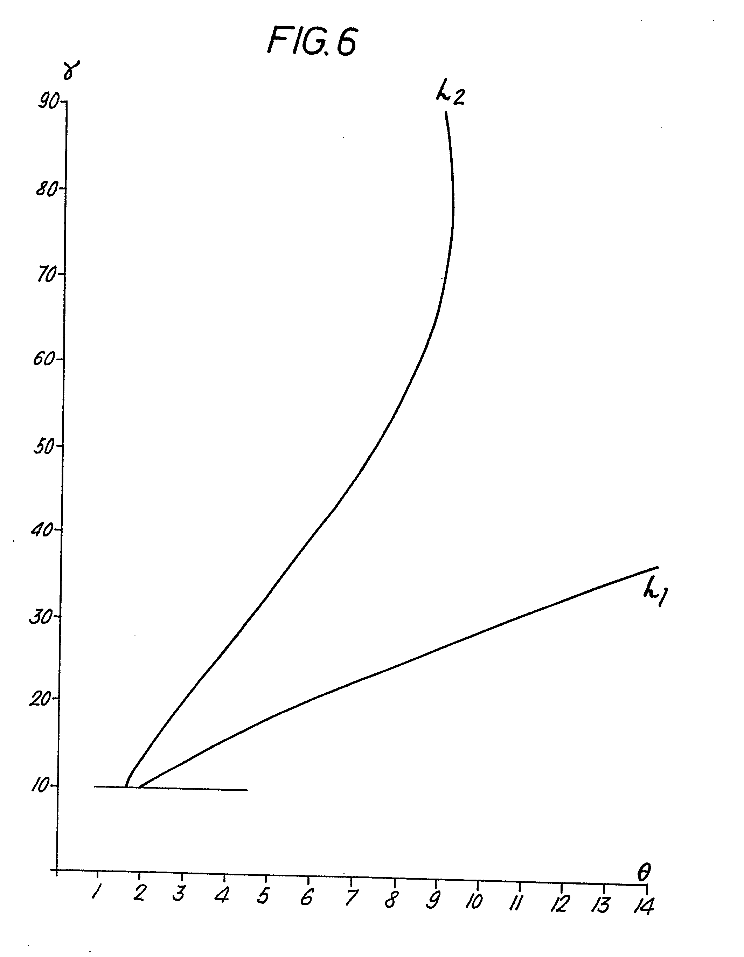

Figure 6 shows a graph of prism angle $\Theta$ for the refractor 14 against car window angle $\gamma$ when the caravan window is angled at 80° relative to the horizontal, when the main planes P, P' of the refractors are generally parallel to the associated windows, and when the refractor 18 has a prism angle of approximately 16° and both refractors have a refractive index of 1.495.  The curve L1 represents
a minimum prism angle for each angle of the car rear
window when the field of view occupies the bottom
of the car rear window.  The curve L2 represents a
maximum prism angle for each angle of the car rear
window when the field of view occupies the top of the
car rear window.  Consequently, for any given car rear
window angle, there is a range of workable prism angles
between these two curves.  Equally, for any given prism
angle, there is a range of suitable car models.

As shown, a refractor, such as the refractor 14,
having a prism angle between 7° and 10° can be employed
in all cars having rear windows oriented between
30° and 50° in relation to the horizontal.  In other
words, such a refractor suits the majority of cars.

By altering the prism angle of the refractor in
the caravan and/or the refractive index of one or
each refractor, the gradients of the two curves L1
and L2 are varied although their general contour
remains the same.  It is thus possible to extend the preferred range of prism angles so that it is from approximately 6° to approximately 11°.

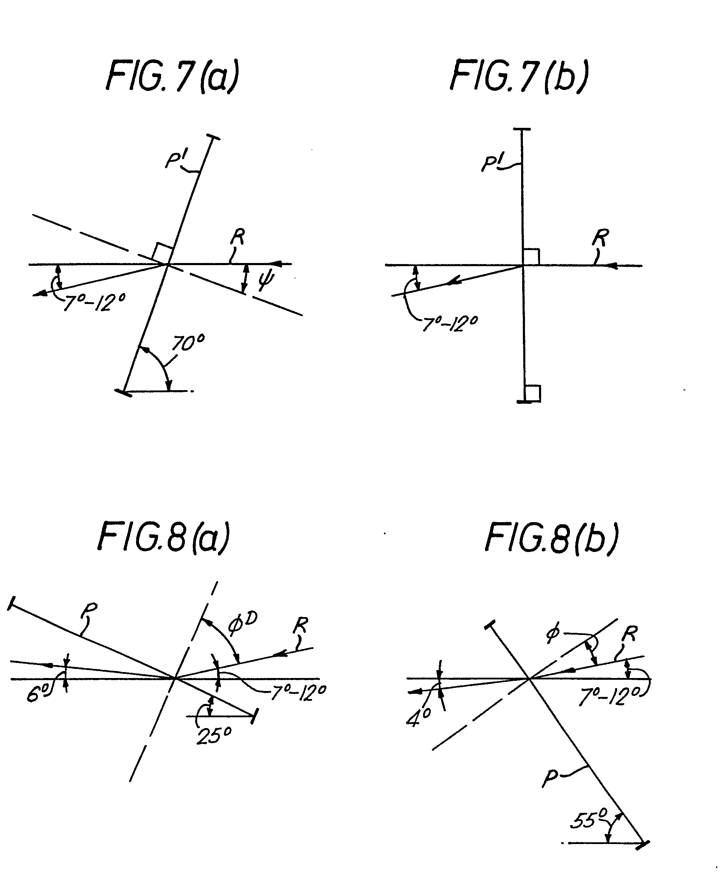

More generally, it can be stated that the limiting orientations for the caravan front window within which a single design of refractor is operable are 70° and 90° in relation to the horizontal. Further, it is considered that it is desirable for such a refractor to be designed to bend the forwardly directed, horizontal, light ray R through the caravan downwardly through an angle from 7° to 12° irrespective of the orientation of the caravan front window. In other words, a preferred refractor for use in the caravan is configured to bend a forwardly directed light ray, which is at an angle $\psi$ of 20° relative to the normal to the main plane P' of the refractor through an angle from 7° to 12° away from the normal, as shown in Figure 7a; and to bend a forwardly directed light ray, which is normal to the main plane P' of the refractor, through an angle from 7° to 12° away from the normal as shown in Figure 7b.

In relation to the car, it can be stated that the limiting orientations for the car rear window within which a single design of refractor is operable are 25° and 55° in relation to the horizontal. In the case of the former limit, the forwardly directed light ray R from the caravan will tend to impinge on such a refractor towards its lower edge and it is considered that the refractor should be designed to bend the light ray upwardly towards the internal rear view mirror 22 at an angle of 6° relative to the horizontal. In the case of the latter limit, the forwardly directed light ray R from the caravan will tend to impinge on the refractor towards its upper edge and it is considered desirable that the refractor be designed to bend the light ray so that it extends downwardly at an angle of 4° relative to the horizontal towards the internal rear view mirror 22. Thus, a preferred refractor for the car is configured to respond to forwardly directed light rays approaching the refractor at angles $\phi$ between 23° and 58° in relation to the normal to the main plane P of the refractor such that when the light ray is at an angle of 58° relative to the normal as shown in Figure 8a it is bent through an angle from 13° to 18° in a direction away from the normal; and such that when the light ray is at an angle of 23° relative to the normal as shown in Figure 8b it is bent through an angle from 3° to 8° in a direction away from the normal.

By taking limiting orientations for the caravan front window of 72° and 86° (in which case $\psi$ ranges from 4° to 18°) and limiting orientations of 30° and 50° for the car rear window (in which case $\phi$ ranges from 28° to 53°), the possible options for the configurations of the two refractors are increased given a desired path for the light ray R. As already mentioned, in this desired path, the light ray R is bent downwardly through an angle from 7° to 12° at the caravan refractor in each of the limiting orientations of caravan window and is bent at the car refractor so that it extends upwardly relative to the horizontal at an angle of 6° in one of the limiting orientations of car window and so that it extends downwardly at an angle of 4° in relation to the horizontal in the other limiting orientation for the car window.

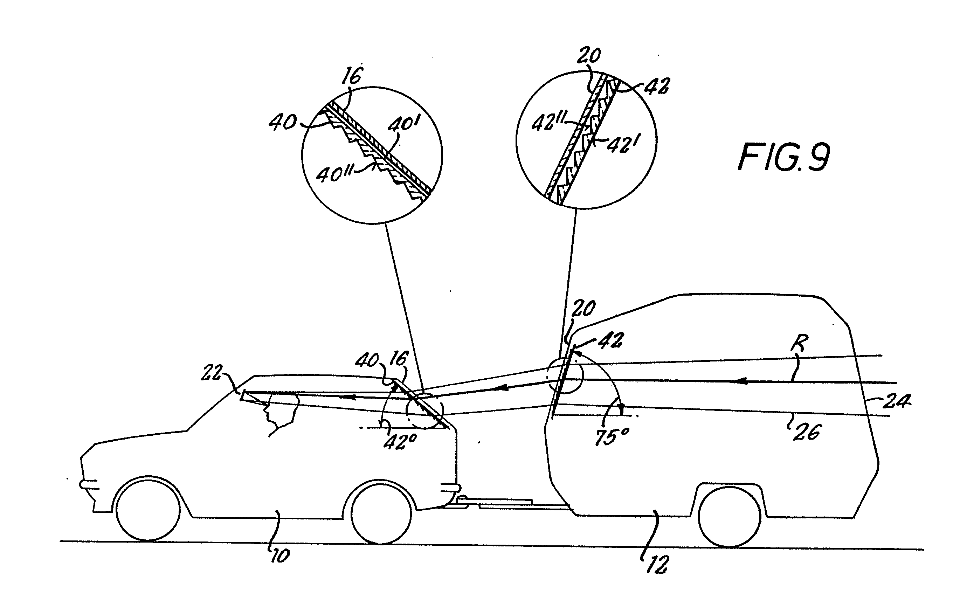

An alternative arrangement for the refractors is shown in Figure 9. As before, a sheet refractor 40 in the form of a fresnel prism is mounted in the rear window 16 of the car 10 using one of the mounting arrangements already described. One face 40' of the refractor 40 is plane and the other face 40'' is corrugated and defines a set of prisms. However, in this instance, the plane face 40' is situated facing the window 16, by contrast with the arrangement of Figures 1 and 5.

Similarly, a sheet refractor 42 in the form of a fresnel prism is mounted adjacent the front window 20 of the caravan using one of the mounting arrangements already described. One face 42' of the refractor 42 is plane and the other face 42'' is corrugated and defines a set of prisms. The corrugated face 42'' faces the caravan front window 20, which is again in contrast to the arrangement of Figures 1 and 5.

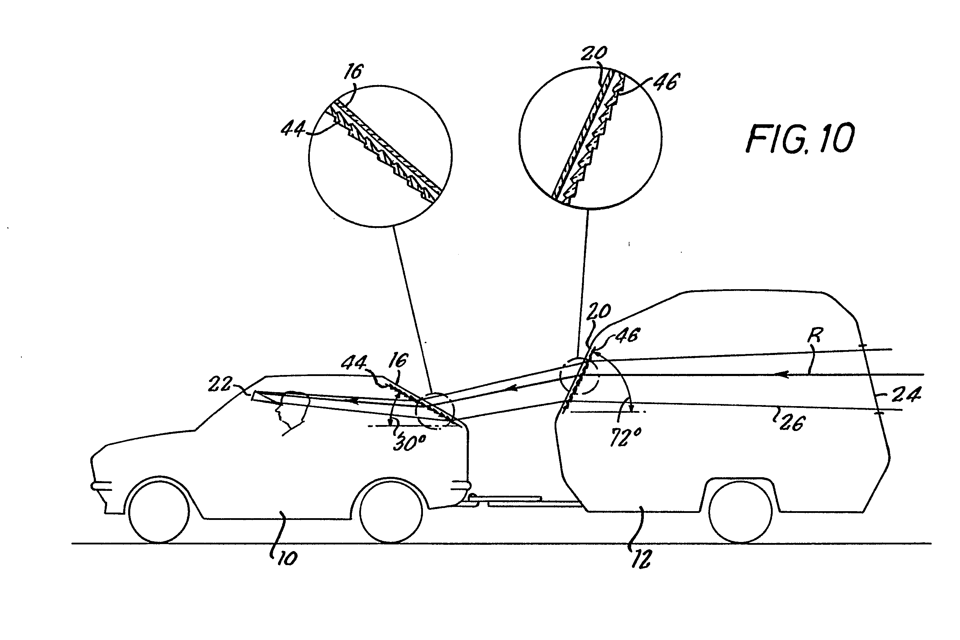

A further possibility is illustrated in Figure 10. This time, the rear window 16 of the car and the front window 20 of the caravan contain sheet refractors 44, 46, in each of which both faces are corrugated to define a set of prisms. The refractors 44, 46 are mounted on the windows by mounting means as described above.

The refractors shown in Figures 9 and 10 are designed to fulfil the criteria specified in relation to Figures 7 and 8 and so may be employed in various combinations of car and caravan. It will be appreciated, of course, that the preferred ranges for the prism angles of these refractors will differ from those already mentioned since for any given orientation of each refractor the angle of incidence of the light ray R differs from the angle of incidence of the light ray R on the corresponding refractor 14, 18 when in the same orientation.

Amongst the modifications which are possible within the scope of the invention are the following:

Although the described refractors are constructed for use in a variety of models of car and caravan, it is possible to employ an individual pair of refractors for use in particular models of car and caravan to optimise the field of view for those particular models.

In the systems shown in Figures 1, 5 and 9, one of the fresnel prisms has its plane face adjacent the associated window and the other has its corrugated face adjacent the associated window. This is not essential. Both such prisms could have their plane prisms facing the adjacent windows, or both of the prisms could have their corrugated faces near to the relevant windows, providing that the prism angles were altered accordingly.

The embodiments described all feature laminar or sheet refractors including sets of simple prisms. However, other optical devices may be used instead. In particular, the described fresnel prisms may be replaced by fresnel cylindrical or spherical lenses, e.g. for altering the vertical scale of the field of view or for altering enlarging or reducing the overall field.

For simplicity it has been assumed in the above description that the caravan front window 20 and the car rear window 16 are generally flat and that the refractors are correspondingly generally planar both as manufactured and as mounted. In practice, the windows 16, 20 may be to a limited extent curved, at least in the main viewing area. Likewise, the refractors may be formed on mounting, or preformed, to conform generally to such curvature. It is not, however, essential for the refractors to conform to the flatness or curvature of these windows.

When a refractor is slightly curved there will not, of course, be a main plane through the whole refractor, but nevertheless the refractor can be considered to have a general plane extending substantially parallel to the main viewing area of the refractor.

CLAIMS:

1. A rear viewing system for a driver of a vehicle towing a caravan, said system comprising a first optical device carried by said caravan so as to define a viewing path for the driver rearwardly, by way of an internal rear view mirror within said vehicle, through the rear window of said vehicle and through said caravan, characterised in that said first optical device (18; 42; 46) is arranged to bend light downwardly towards said vehicle (10), and in that a second optical device (14; 40; 44) is carried by said vehicle for directing light from said caravan (12) towards said internal rear view mirror (22).

2. A system as claimed in claim 1, characterised in that said first optical device is arranged to bend a horizontal, forwardly directed, light ray (R) downwardly through an angle from 7° to 12°, and in that said second optical device is arranged to bend said light ray to orient said light ray in the range from 4° below the horizontal to 6° above the horizontal.

3. A system as claimed in claim 1 or 2, characterised in that said first optical device comprises a first sheet refractor defining a first set of prisms.

4.   A system as claimed in claim 3 characterised in that one face of said first sheet refractor is a substantially continuous surface and the other face defines said first set of prisms.

5.   A system as claimed in claim 4, characterised in that said first sheet refractor is mounted inside said caravan adjacent to the front window of said caravan with said other face facing away from said front window.

6.   A system as claimed in any of claims 3 to 5, characterised in that said first sheet refractor is designed to bend a forwardly directed light ray, within a first range of angles including angles between 0° and 20° to a normal to a general plane of said first sheet refractor, through an angle from 7° to 12°.

7.   A system as claimed in claim 6, characterised in that said first range of angles extends from 4° to 18° in relation to said normal to said general plane of said first sheet refractor.

8.   A system as claimed in any of claims 3 to 7, characterised in that the prisms in said first set of prisms have equal angles and in that each prism angle is in the range from 12° to 27°.

9. A system as claimed in claim 1 or 2, characterised in that said second optical device comprises a second sheet refractor defining a second set of prisms.

10. A system as claimed in claim 9, characterised in that one face of said second sheet refractor is a substantially continuous surface and the other face of said second sheet refractor defines a second set of prisms.

11. A system as claimed in claim 10, characterised in that said second sheet refractor is mounted inside said vehicle and adjacent to the rear window of said vehicle with said other face facing said rear window of said vehicle.

12. A system as claimed in any of claims 9 to 11, characterised in that said second sheet refractor is designed to bend first and second forwardly directed light rays, within a second range of angles including angles between 23° and 58° to a normal to a general plane of said second refractor, such that said first light ray is bent through an angle from 3° to 8° and said second light ray is bent through an angle from 13° to 18°.

0085479

13.  A system as claimed in claim 12, characterised
in that said second range of angles extends from
28° to 53° in relation to said normal to said general
plane of said second refractor.

14.  A system as claimed in claim 9 to 13,
characterised in that the prisms in said second set
of prisms have equal prism angles and in that each
prism angle is in the range from 6° to 11°.

15.  Viewing means for forming a rear viewing
path for a driver of a vehicle towing a caravan,
said viewing means comprising a first optical device
for said caravan and being characterised by a second
optical device (14; 40; 44) for said vehicle (10)
and by said first optical device (18; 42; 46) and said
second optical device being designed to co-operate
such that, when carried by said vehicle and said
caravan (12) respectively, said first optical device
bends light downwardly towards said second optical
device and said second optical device bends light
towards the internal rear view mirror (22) of said
vehicle.

16. Viewing means for forming an optical path which is bent at two locations, the viewing means comprising first and second optical devices, characterised in that said first optical device (18; 42; 46) and said second optical device (14; 40; 44) are designed to cooperate such that, when arranged in predetermined positions relative to one another, said first optical device bends a beam of light away from a first path through an angle from 7 ° to 12 ° towards said second optical device and said second optical device bends said beam of light into a second path which is oriented between an angle of 4° away from said first path and an angle of 6 ° towards said first path.

17. Viewing means for forming an optical path which is bent at two locations, said viewing means comprising first and second optical devices, characterised in that said first optical device (18; 42; 46) bends first and second light rays incident within the limits of 0° and 20° relative to a normal to a general plane of said first optical device such that each said light ray is bent through an angle from 7° to 12°, and in that said second optical device (14; 40; 44) bends first and second light rays incident within the limits of 23° and

0085479

58° relative to a normal to a general plane of said second optical device such that said first light ray is bent through an angle from 3° to 8° and said second light ray is bent through an angle from 13° to 18°.

18. A fresnel prism providing said first optical device as claimed in any preceding claim.

19. A fresnel prism providing said second optical device as claimed in any preceding claim.

FIG.1

FIG. 2

FIG.3

FIG.4

FIG.5

# FIG.6

## FIG. 7(a)

P'

R

7°-12°

ψ

70°

## FIG. 7(b)

P'

R

7°-12°

## FIG.8(a)

P

φD

R

6°

7°-12°

25°

## FIG.8(b)

φ

R

4°

7°-12°

P

55°

0085479

FIG.9

FIG.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 341 695 (E. GERATSDORFER) <br> * Claims * <br> --- | | B 60 R 1/00 |
| A | FR-A-2 210 956 (F. BIESEL) <br> * Figure 3 * <br> --- | | |
| D,A | GB-A-1 370 376 (C.E. ROBERTS) <br> ----- | | |
| | | | **TECHNICAL FIELDS SEARCHED (Int. Cl. 3)** |
| | | | B 60 R 1/00 |

The present search report has been drawn up for all claims

| Place of search <br> BERLIN | Date of completion of the search <br> 16-03-1983 | Examiner <br> BECKER W D H |
|---|---|---|